# EUROPÄISCHE PATENTSCHRIFT

(11) **EP 1 114 103 B1**
(45) Veröffentlichungstag und Bekanntmachung des Hinweises auf die Patenterteilung: **15.10.2003**
(21) Anmeldenummer: 99941600.1
(22) Anmeldetag: 11.08.1999
(51) Int. Cl.: C09C 1/00, C09C 1/64

(54) **MEHRSCHICHTPIGMENTE AUF BASIS BESCHICHTETER METALLPLÄTTCHEN**
MULTI-LAYER PIGMENTS BASED ON COATED METAL LAMINA
PIGMENTS MULTICOUCHES A BASE DE PLAQUETTES METALLIQUES REVETUES

(30) Priorität: 14.08.1998 DE 19836810
(43) Veröffentlichungstag der Anmeldung: 11.07.2001
(73) Patentinhaber: MERCK PATENT GmbH, 64293 Darmstadt (DE)
(72) Erfinder: ANDES, Stephanie, D-63452 Hanau (DE); GEORGE, Sabine, D-64625 Bensheim (DE); HERBSKI, Margarete, D-64407 Gross-Bieberau (DE); REYNDERS, Peter, D-64347 Griesheim (DE); VOGT, Reiner, D-64289 Kranichstein (DE); DIETZ, Johann, D-63128 Dietzenbach (DE); KNIESS, Helge, D-64331 Weiterstadt (DE); STEUDEL, Elke, D-64289 Darmstadt (DE)
(86) Internationale Anmeldenummer: EP9905915
(87) Internationale Veröffentlichungsnummer: WO00009617

(56) Entgegenhaltungen:
- EP-A- 0 668 329
- EP-A- 0 768 343

## Beschreibung

Die vorliegende Erfindung betrifft Mehrschichtpigmente auf der Basis von plättchenförmigen Metallsubstraten, deren Belegung mit zwei oder mehr Metalloxidschichten ausschließlich im wäßrigen Medium im Eintopfverfahren erfolgt. Weiterhin betrifft die Erfindung die Verwendung der Mehrschichtpigmente in Farben, Lacken, Druckfarben, Sicherheitsdruckfarben, Kunststoffen, keramischen Materialien und in kosmetischen Formulierungen.

Effektpigmente werden in vielen Bereichen der Technik eingesetzt, beispielsweise in Automobillacken, Lacken, Tinten, Anstrichfarben, Druckfarben, insbesondere Sicherheitsdruckfarben, Kunststoffen, Gläsern, keramischen Produkten und in kosmetischen Zubereitungen.

Ihre optische Wirkung beruht auf der gerichteten Reflexion von Licht an überwiegend flächig ausgebildeten, zueinander parallel ausgerichteten, metallischen oder stark lichtbrechenden Pigmentteilchen. Letzere sind plättchenförmig und ihre optischen Eigenschaften werden durch Reflexion und interferenz bestimmt.

Effektpigmente, die einen winkelabhängigen Farbwechsel zwischen mehreren Interferenzfarben zeigen, sind aufgrund ihres Farbenspiels von besonderem Interesse für Automobillackierugen sowie bei fälschungssicheren Wertschriften. Derartige Pigmente auf der Basis von mehrfach beschichteten plättchenförmigen Metallsubstraten, insbesondere Aluminiumplättchen, sind bekannt.

Erstmals wurden Mehrschichtpigmente auf Basis einer zentralen hochreflektierenden Metallschicht in der U.S. 3,438,796 beschrieben. Im Hochvakuum wurden alternierend SiO₂- und Aluminiumschichten in einem Aufdampfverfahren abgeschieden, von der Basisfolie abgetrennt, gemahlen und klassiert. Bedingt durch das Herstellverfahren ist die chemische Resistenz so hergestellter Pigmentpulver aber sehr gering, da das verwendete Metall an den Kanten für den chemischen Angriff offenliegt. Die so erhaltenen beschichteten Aluminiumpigmente sind teuer und das Verfahren ist für den großtechnischen Maßstab denkbar ungeeignet.

Aus der U.S. 4,879,140 ist ein weiteres Verfahren zur Herstellung von Aluminiumpigmenten bekannt, bei dem in einem Mikrowellenplasma Metallverbindungen derart verdampft werden, daß sie sich an vorgesehenen Oberflächen in der Kammer als Film abscheiden. Dieser Film läßt sich mechanisch entfernen, mahlen und geeignet klassieren. Auch dieses Verfahren unterliegt den erwähnten Nachteilen in Kosten und Dimension.

In der EP 0 668 329 A2 werden polychromatische Pigmente mit einem Aluminiumsubstrat offenbart, das in einem neutralem, wäßrigem Medium mit Siliziumdioxid beschichtet wird. Die naßchemische Belegung der Substrate erfolgt durch hydrolytische Zersetzung organischer Silizium-Verbindungen in einer Ammoniak-Lösung, wobei der pH-Wert sich nicht ändert. Nachfolgend lassen sich mit dem CVD-Verfahren weitere Schichten von z.B. Metallen auf die SiO₂ beschichteten Aluminiumsubstrate aufbringen.

In den Patentanmeldungen EP 0 686 675 A1, EP 0 708 154 A2 und EP 0 741 170 A1 werden ebenfalls Aluminiumpigmente mit Hilfe des CVD-Verfahrens mit Metalloxidschichten belegt.

Aus der EP 0 826 745 A2 sind durch Physical Vapor Deposition (PVD) hergestellte Metallpigmente auf Aluminiumbasis bekannt, die sich dadurch auszeichnen, daß alle nach der Zerkleinerung eines durch PVD erzeugten Metallfilms freiliegenden Metallflächen, insbesondere die Bruchflächen, mit einer passivierenden Schutzschicht belegt sind.

Von großem Nachteil sind bei allen Aufdampfverfahren die damit verbundenen hohen Kosten.

In der EP 0 768 343 A2 werden Glanzpigmente beansprucht, wobei auf metallische Substrate durch hydrolytische Zersetzung organischer Siliziumverbindungen SiO₂-Schichten aufgebracht werden. Die Zersetzung wird durch die Anwesenheit eines organischen Lösemittels unterstützt, in dem die metallorganischen Einsatzkomponenten mehr oder weniger gut löslich sind. Bedingt durch den Einsatz von metallorganischen Komponenten und organischen Lösungsmitteln ist dieses Verfahren nicht sehr ökonomisch und macht gleichzeitig hohe Sicherheitsvorkehrungen erforderlich.

Aus der U.S. 2,885,366 ist die Beschichtung von Aluminiumplättchen mit Siliziumdioxid aus Wasserglaslösungen bekannt. Die Oxidschicht wird hier jedoch nur zur Passivierung der Aluminiumoberfläche aufgebracht.

Aufgabe der vorliegenden Erfindung ist es ein Mehrschichtpigment auf Basis von Metallplättchen herzustellen, wobei die Belegung des Basissubstrats weder durch CVD- noch PVD-Verfahren erfolgen soll, sondern ausschließlich naßchemisch und ohne Einsatz von brennbaren Verbindungen. Gleichzeitig soll sich das Pigment durch seine optischen Eigenschaften und/oder starke Winkelabhängigkeit der Interferenzfarben und seine vorteilhaften Anwendungseigenschaften auszeichnen.

Überraschenderweise wurde nun ein Mehrschichtpigment auf Basis von mehrfach beschichteten plättchenförmigen Metallsubstraten gefunden, wobei die Belegung des Substrats mit Dielektrika im wäßrigen Medium im Eintopfverfahren erfolgt. Das naßchemisch beschichtete Metallsubstrat zeichnet sich insbesondere durch seine Farbstärke aus. Metallplättchen wie Aluminium, die für sich in Wasser bei unterschiedlichen pH-Werten unter Wasserstoffentwicklung reagieren, lassen sich durch geeignete Wahl der Beschichtungsparameter in chemisch inerte Mehrschichtpigmente überführen.

Gegenstand der Erfindung sind somit Mehrschichtpigmente auf Basis von plättchenförmigen Metallpigmenten, hergestellt indem Metallpigmente ausschließlich naßchemisch im Eintopfverfahren belegt werden, wobei die Metallpigmente zunächst in Wasser suspendiert, bei einem pH-Wert von 6-11 mit einer amorphen glasartigen Schicht und nachfolgend bei einem pH-Wert von < 4 mit ein oder mehreren Metalloxiden bzw. Metalloxidgemischen belegt werden.

Gegenstand der Erfindung ist weiterhin die Verwendung der so hergestellten Mehrschichtpigmente in Farben, Lacken, Druckfarben, Sicherheitsdruckfarben, Kunststoffen, keramischen Materialien und kosmetischen Formulierungen. Gegenstand der Erfindung ist ebenfalls die Verwendung der erfindungsgemäßen Pigmente als Dotierstoff bei der Lasermarkierung von Kunststoffen.

Geeignete Basissubstrate für die erfindungsgemäßen Mehrschichtpigmente sind Plättchen aus Metall oder Metallegierungen, wie z. B. Eisen, Aluminium, Zinn, Zink, Silber, Kupfer, Titan, Lanthanide, Kobalt, Nickel, sowie alle dem Fachmann bekannten handelsüblichen Metallpulver, die in Wasser weitgehend stabil sind. Weiterhin können als Basissubstrat auch Gemische der genannten Metalle und Metallegierungen eingesetzt werden. Bevorzugte Basissubstrate sind Aluminiumplättchen sowie Aluminiumlegierungen.

Die Größe der Basissubstrate ist an sich nicht kritisch und kann auf den jeweiligen Anwendungszweck abgestimmt werden. In der Regel haben die plättchenförmigen Metallsubstrate eine Dicke zwischen 0,1 und 5 µm, insbesondere zwischen 0,2 und 4,5 µm. Die Ausdehnung in den beiden anderen Bereichen beträgt üblicherweise zwischen 1 und 250 µm, vorzugsweise zwischen 2 und 200 µm und insbesondere zwischen 5 und 50 µm.

Die Dicke der einzelnen Metalloxidschichten auf dem Metallsubstrat ist wesentlich für die optischen Eigenschaften des Mehrschichtpigments. Für ein Pigment mit intensiven Interferenzfarben muß die Dicke der einzelnen Schichten genau aufeinander eingestellt werden.

Die bei zunehmender Filmdicke resultierende Variation der Farbe ergibt sich aus der Verstärkung bzw. Schwächung bestimmter Wellenlängen des Lichtes durch Interferenz. Wenn mehrere Schichten in einem Mehrschichtpigment die gleich optische Dicke besitzen, wird die Farbe des reflektierten Lichts mit zunehmender Zahl der Schichten intensiver. Darüber hinaus kann durch geeignete Wahl der Schichtdicken eine besonders starke Variation der Farbe in Abhängigkeit vom Betrachtungswinkel erreicht werden. Es bildet sich ein ausgeprägter sogenannter Farbflop aus. Die Dicke der einzelnen Metalloxidschichten unabhängig von ihrem Brechungsindex beträgt in Abhängigkeit vom Anwendungsgebiet in der Regel 10 bis 1000 nm, vorzugsweise 15 bis 800 nm und insbesondere 20-600 nm.

Die erfindungsgemäßen Mehrschichtpigmente weisen in der Regel mindestens zwei Metalloxidschichten auf. Vorzugsweise handelt es sich um eine niedrigbrechende Schicht in Kombination mit einer farbigen oder farblosen hochbrechenden Metalloxidschicht. Die Pigmente können bis zu 12 Schichten aufweisen, wobei die Dicke aller Schichten auf dem Metallsubstrat 3 µm allerdings nicht überschreiben sollte. Vorzugsweise enthalten die erfindungsgemäßen Mehrschichtpigmente nicht mehr als 7, insbesondere nicht mehr als 5 Metalloxidschichten. Insbesondere bevorzugt sind Pigmente, die auf dem Metallsubstrat zunächst mit einer amorphen glasartigen Schicht, vorzugsweise eine amorphe SiO₂-Schicht. und nachfolgend mit TiO₂ und/oder Fe₂O₃ beschichtet sind.

Die amorphe Glasschicht auf dem Metallsubstrat besteht vorzugsweise aus SiO₂, Al₂O₃, AlO(OH), B₂O₃ oder aus den Gemischen der genannten Metalloxide. Die Dicke der Schicht beträgt 10-1000 nm, vorzugsweise 20-800 nm und insbesondere 30-600 nm.

Die amorphe glasartige Schicht, z. B. eine SiO₂-Schicht, auf dem Substrat führt zu einer Inertisierung, so daß die so behandelten Metallsubstrate über längere Zeit in einem wäßrigem Medium lagern können, während die unbehandelten Metallpulver sich oft schon binnen Tagesfrist zu den adäquaten Oxihydraten abreagiert haben. Selbst saure pH-Bereiche werden von den behandelten Metallpulvern unbeschadet überstanden, ebenso alkalische. Die Stabilität der Metallsubstrate in wäßrigen Medien läßt sich zumeist durch Nachbehandlung mit bekannten oberflächenaktiven Substanzen steigern. Häufig empfiehlt es sich die Metallplättchen vor der Belegung zu passivieren. Die Passivierung erfolgt, indem das Metallpulver in wäßriger Lösung mit einem Oxidationsmittel, vorzugsweise mit Wasserstoffperoxid oder HNO₃, behandelt wird. Das so passivierte Metallsubstrat wird anschließend mit der amorphen glasartigen Schicht belegt.

Vorzugsweise werden auf die amorphe glasartige Schicht ein oder mehrere farbige oder farblose hochbrechende Metalloxidschichten aufgebracht. Als hochbrechendes Schichtmaterial eignen sich alle dem Fachmann bekannten hochbrechenden Materialien, die filmartig und einfach auf die Substratmaterialien aufgebracht werden können. Besonders geeignet sind Metalloxide oder Metalloxidgemische, wie z.B. TiO₂, Fe₂O₃, ZrO₂, ZnO, SnO₂, BiOCl, Pseudobrookit oder Verbindungen mit hoher Brechzahl, wie z. B. Eisenoxidhydrate, Titansuboxide, Chromoxide sowie Mischungen bzw. Mischphasen der genannten Verbindungen untereinander oder mit anderen Metalloxiden. Die Dicke dieser Schicht beträgt 10-550 nm, vorzugsweise 15-400 nm und insbesondere 20-350 nm.

Als farblose niedrigbrechende für die Beschichtung geeignete Materialien sind vorzugsweise Metalloxide bzw. die entsprechenden Oxidhydrate, wie z.B. SiO₂, Al₂O₃, AIO(OH), B₂O₃ oder ein Gemisch der genannten Metalloxide, zu nennen. Die Dicke der niedrigbrechenden Schicht beträgt 10-1000 nm, vorzugsweise 20-800 nm und insbesondere 30-600 nm.

Die erfindungsgemäßen Mehrschichtpigmente werden hergestellt, indem auf das inertisierte und gegebenenfalls passivierte Metallsubstrat durch hydrolytische Zersetzung von Metallsalzen hoch- und niedrigbrechende Interferenzschichten mit genau definierter Dicke und glatten Oberflächen abgeschieden werden. Von besonderer Bedeutung ist, daß bei jeder Belegung der pH-Wert neu eingestellt werden muß.

Zur Herstellung der Pigmente werden zunächst die Metallsubstrate, die vor der Beschichtung von gegebenenfalls anhaftenden organischen Bestandteilen befreit werden, in Wasser suspendiert und bei einem pH-Wert von 6-11 mit einer amorphen glasartigen Schicht belegt. Diese amorphe Schicht entsteht vorzugsweise durch Ausfällung von SiO₂ aus Natron- oder Kaliwasserglaslösungen oder durch hydrolytische Zersetzung von Aluminium-, Zinn-, Zink- oder Borsalzen, sowie deren Lösungen in alkalischer und kationischer Form. Für die Inertisierung der Metallsubstrate eignen sich ebenfalls Phosphate, wie z.B. Zink-, Zinn(II)-, Zinn(IV)-, Aluminium- oder Zirkonphosphate.

Nach der Belegung mit der amorphen Schicht wird der pH-Wert mit einer Mineralsäure auf < 4 abgesenkt. Durch die Zugabe von ein oder mehreren hydrolysierbaren Metallsalzen werden die Metalloxide bzw. Metalloxidhydrate direkt auf die amorphe glasartige Schicht aufgefällt, ohne daß es zu Nebenfällungen kommt. Der pH-Wert wird üblicherweise durch gleichzeitiges Zudosieren einer Base und/oder Säure konstant gehalten. Zuletzt werden die beschichteten Pigmente abgetrennt, gewaschen und getrocknet und gegebenenfalls geglüht, wobei die Glühtemperatur in Hinblick auf das eingesetzte Substrat und die jeweils vorliegende Beschichtung variiert. In der Regel liegen die Glühtemperaturen zwischen 250 und 1000 °C, vorzugsweise zwischen 350 und 900 °C.

Vorzugsweise werden die Metallpigmente, insbesondere Aluminiumplättchen, zunächst mit einer amorphen SiO₂-Schicht bei einem pH-Wert von 6-8 belegt. Nachfolgend wird auf die amorphe SiO₂-Schicht im stark sauren Medium naßchemisch eine TiO₂-Schicht und/oder Fe₂O₃-Schicht aufgebracht. Weiterhin bevorzugt sind Mehrschichtpigmente, die eine Schichtenfolge aus SiO₂, SnO₂, TiO₂ und/oder Fe₂O₃ oder aus SiO₂, SnO₂, TiO₂, SiO₂, SnO₂ und TiO₂ bzw. aus SiO₂, SnO₂, Fe₂O₃, ,SiO₂, SnO₂ und Fe₂O₃ aufweisen.

Das Aufbringen der amorphen Siliziumdioxidschicht kann z.B. wie folgt vorgenommen werden. Zu einer auf etwa 50-100 °C erhitzten Suspension des zu beschichteten Metallsubstrats wird bei pH=6-11 eine Kali- oder Natronwasserglaslösung zudosiert. Durch gleichzeitige Zugabe einer verdünnten Mineralsäure wie z.B. HCl, HNO₃ oder H₂SO₄, wird der pH-Wert konstant gehalten. Sobald die gewünschte Schichtdicke an SiO₂ erreicht ist, wird die Zugabe der Wasserglaslösung gestoppt. Anschließend wird ca. 0,5 h nachgerührt.

Für das Aufbringen der Titandioxidschichten wird das in der U.S. 3,553,001 beschriebene Verfahren bevorzugt. Zu einer auf etwas 50-100 °C erhitzten Suspension des zu beschichtenden Materials wird langsam eine wäßrige Titansalzlösung zugegeben, und es wird durch gleichzeitiges Zudosieren einer Base, wie z.B. wäßrige Ammoniaklösung oder wäßrige Alkalilauge, ein weitgehend konstanter pH-Wert von etwa 0,5-3 eingehalten. Sobald die gewünschte Schichtdicke an TiO₂ erreicht ist, wird die Zugabe der Titansalzlösung und der Base gestoppt. Dieses auch als Titrationsverfahren bezeichnete Verfahren zeichnet sich dadurch aus, daß ein Überschuß an Titansalz vermieden wird. Das wird dadurch erreicht, daß man pro Zeiteinheit nur eine solche Menge der Hydrolyse zuführt, wie sie für eine gleichmäßige Beschichtung mit dem hydratisierten TiO₂ erforderlich ist und wie pro Zeiteinheit von der verfügbaren Oberfläche der zu beschichtenden Substrate aufgenommen werden kann. Es entstehen deshalb keine hydratisierten Titandioxidteilchen, die nicht auf der zu beschichtenden Oberfläche niedergeschlagen sind.

Bei der Belegung der Metallsubstrate können auch die zur Herstellung von Pertglanzpigmenten entwickelten naßchemischen Beschichtungsverfahren angewendet werden, wie sie z. B. beschrieben sind in den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602 und 32 35 017.

Zur Erhöhung der Licht- und Wetterstabilität empfiehlt es sich häufig in Abhängigkeit vom Einsatzgebiet das Mehrschichtpigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung wird die chemische Stabilität der Pigmente weiter erhöht und/oder die Handhabung des Pigments, insbesondere die Einarbeitung in unterschiedliche Anwendungsmedien, erleichtert.

Die erfindungsgemäßen Pigmente sind mit einer Vielzahl von Farbsystemen kompatibel, vorzugsweise aus dem Bereich der Lacke, Farben und Druckfarben. Aufgrund der nicht kopierbaren Effekte können die erfindungsgemäßen Mehrschichtpigmente insbesondere bei der Herstellung von fälschungssicheren Wertschriften, wie z.B. Geldscheinen, Schecks, Scheckkarten, Kreditkarten, Ausweisen, Identifikationskarten, Steuermarken, Briefmarken, Bahn- und Flugtickets, Telefonkarten, Lotterielosen, Geschenkzertifikaten, etc. in Sicherheitsdruckfarben verwendet werden.

Weiterhin sind die Schichtpigmente für funktionelle Anwendungen im Korrosionsschutz sowie im Leitfähigkeitssektor geeignet.

Die erfindungsgemäßen Pigmente sind ebenfalls als Dopant - allein oder in Kombination mit anderen bekannten Dotierstoffen - bei der Lasermarkierung von Kunststoffen geeignet. Durch den Zusatz der Pigmente in Konzentrationen von 0,1 bis 4 Gew. % bezogen auf das Kunststoffsystem, vorzugsweise 0,5 bis 2,5 Gew. % und insbesondere 0,3 bis 2,0 Gew. %, wird bei der Lasermarkierung ein hoher Kontrast erreicht. Die Konzentration der Pigmente im Kunststoff ist allerdings von dem eingesetzten Kunststoffsystem abhängig. Der geringe Pigmentanteil verändert das Kunststoffsystem unwesentlich und beeinflußt nicht dessen Verarbeitbarkeit.

Alle bekannten thermoplastischen Kunststoffe, wie sie z. B. im Ullmann, Bd. 15, S. 457 ff., Verlag VCH, beschrieben sind, können für die Lasermarkierung Anwendung finden. Geeignete Kunststoffe sind z. B. Polyethylen, Polypropylen, Polyamide, Polyester, Polyesterester, Polyetherester, Polyphenylenether, Polyacetat, Polybutylenterephthalat, Polymethylmethacrylat, Polyvinylacetat, Polystyrol, Acrylnitril-Butadien-Styrol (ABS), Acrylnitril-Styrol-Acrylester (ASA), Polycarbonat, Polyethersulfone, Polyetherketone sowie deren Copolymeren und/oder Mischungen. Insbesondere geeignet sind thermoplastische Polyurethane (TPU) aufgrund ihrer hochwertigen mechanischen Eigenschaften und den kostengünstigen Verarbeitungsmethoden. Thermoplastischen Polyurethane sind seit langem aus zahlreichen Literaturveröffentlichungen und Patentschriften, wie z. B. aus der GB 1 057 018 oder EP 0 594 931, bekannt.

Die Einarbeitung der beschichteten Metallpigmente in den thermoplastischen Kunststoff erfolgt, indem das Kunststoffgranulat mit dem Pigment gemischt und dann unter Wärmeeinwirkung verformt wird. Dem Kunststoffgranulat können bei der Einarbeitung der Pigmente gegebenenfalls Haftmittel, organische polymerverträgliche Lösemittel, Stabilisatoren und/oder unter den Arbeitsbedingungen temperaturstabile Tenside zugesetzt werden. Die Herstellung der Kunststoffgranulat/Pigment-Mischung erfolgt in der Regel so, daß in einem geeigneten Mischer das Kunststoffgranulat vorgelegt, mit eventuellen Zusätzen benetzt und danach das Pigment zugesetzt und untergemischt wird. Die Pigmentierung des Kunststoffes erfolgt in der Regel über ein Farbkonzentrat (Masterbatch) oder Compound. Die so erhaltene Mischung kann dann direkt in einem Extruder oder einer Spritzgießmaschine verarbeitet werden. Die bei der Verarbeitung gebildeten Formkörper zeigen eine sehr homogene Verteilung der Pigmente. Anschließend findet die Lasermarkierung statt.

Die Beschriftung mit dem Laser erfolgt derart, daß der Probenkörper in den Strahlengang eines gepulsten Lasers, vorzugsweise eines Nd-YAG-Lasers (1064 bzw. 532 nm) oder CO₂-Lasers (10,6 µm) gebracht wird. Ferner ist eine Beschriftung mit einem Excimer-Laser, z. B. über eine Maskentechnik, möglich. Jedoch sind auch mit anderen herkömmlichen Lasertypen, die eine Wellenlänge in einem Bereich hoher Absorption des verwendeten Pigments aufweisen, die gewünschten Ergebnisse zu erzielen. Die erhaltene Markierung wird durch die Bestrahlungszeit (bzw. Pulszahl bei Pulsiasern) und Bestrahlungsleistung des Lasers sowie des verwendeten Kunststoffsystems bestimmt. Die Leistung der verwendeten Laser hängt von der jeweiligen Anwendung ab und kann im Einzelfall vom Fachmann ohne weiteres ermittelt werden.

Gegenstand der Erfindung ist somit auch die Verwendung der Pigmente in Formulierungen wie Farben, Druckfarben, Sicherheitsdruckfarben, Autolacken, Lacken, Kunststoffen, keramischen Materialien, in kosmetischen Formulierungen und zur Lasermarkierung von Kunststoffen.

Es versteht sich von selbst, daß für die verschiedenen Anwendungszwecke die erfindungsgemäßen Mehrschichtpigmente auch vorteilhaft in Abmischung mit anderen Pigmenten, wie z. B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers), und herkömmlichen transparenten, bunten und schwarzen Glanzpigmenten auf der Basis von metalloxidbeschichteten Glimmer- und SiO₂-Plättchen, etc., verwendet werden können. Die Mehrschichtpigmente können in jedem Verhältnis mit handelsüblichen Pigmenten und Füllern gemischt werden.

Die nachfolgenden Beispiele sollen die Erfindung näher erläutern ohne sie jedoch zu beschränken.

### Beispiele:

### Beispiel 1

100 g Aluminiumpulver mit einem mittleren Teilchendurchmesser von ∼20 µm (Resist 501 der Fa. Eckart-Werke), das thermisch von der organischen Oberflächenbehandlung bei 400 °C befreit wurde, werden in 2 I vollentsalztem Wasser suspendiert. Nach 0,5 h wird mit der Zugabe der Natronwasserglaslösung bei pH = 7,5 begonnen, wobei die Dosierrate 2 ml/min beträgt. Es werden insgesamt 1230 g einer an SiO₂ 13,5 %-igen Natronwasserglaslösung zugegeben. Dabei wird der pH-Wert bei 7,5 mittels Salzsäure konstant gehalten. Es wird solange titriert bis die gewünschte Schichtdicke (Inertisierung) erreicht ist. Danach wird die Dosierung abgestellt und die Reaktion durch 0,5 h bei 90 °C Nachrührzeit vervollständigt. Nun wird der pH-Wert auf 3,0 gestellt und bei 75 °C mit dem Zudosieren einer 3 %-igen Eisen(III)chloridlösung begonnen. Der pH-Wert wird mit 32 %-iger Natronlauge auf pH = 3,0 konstant gehalten. Nach Erreichen der gewünschten Schichtdicke an Eisen(III)oxid rührt man noch 0,5 h nach und filtriert ab. Nach dem Trocknen wird gesiebt und bei 400 °C getempert. Das Produkt besteht aus 32,5 % Aluminium, 57,5 % SiO₂ und 10,0 % Fe₂O₃ und glänzt charakteristisch rotmetallisch.

### Beispiel 2

Analog Beispiel 1 werden 100 g Aluminiumpulver mit einer SiO₂-Schicht belegt. Man erhitzt für 0,5 h auf 90 °C und versetzt mit 4 ml/min mit einer Titantetrachloridlösung (400 g/l) bei pH=1,8 bis zur gewünschten Schichtdicke. Hierbei wird der pH-Wert mit Natronlauge konstant gehalten. Nach beendeter Belegung wird 15 min nachgerührt. Das Produkt wird abfiltriert, gewaschen, getrocknet und bei 400 °C getempert.
Das Produkt besteht aus 32,5 % Aluminium, 57,5 % SiO₂ und 10,0 % TiO₂ und glänzt charakteristisch silbrig.

### Beispiel 3

100 g Aluminiumpulver werden in 400 ml 10 %-iger Wasserstoffperoxidlösung suspendiert und durch 10-minütiges Kochen passiviert. Das passivierte Aluminiumpulver wird in 2 I VE-Wasser suspendiert und 0,5 h gerührt. Die Natronwasserglaslösung wird bei einem pH-Wert von 6,5 mit einer Dosierrate von 2 ml/min zugegeben. Es werden insgesamt 1230 g einer an SiO₂ 13,5 %-igen Wasserglaslösung zugegeben. Dabei wird der pH-Wert bei 6,5 mit Salzsäure konstant gehalten. Es wird solange titriert bis die gewünschte Schichtdicke erreicht ist. Die Suspension wird 0,5 h nachgerührt und anschließend mit einer Zinnlösung (11,6 g SnCl₄ - 5H₂O gelöst in 40 ml 37 %iger Salzsäure und mit VE-Wasser auf 400 ml aufgefüllt) mit einer Dosierrate von mit 4 ml/min solange versetzt bis der pH-Wert auf 1,8 gesunken ist. Der pH-Wert wird mit Natronlauge auf 1,8 konstant gehalten. Nach beendeter Zugabe der Zinnsalzlösung wird 0,5 h nachgerührt. Danach wird mit 4 ml/min Titantetrachloridlösung (400 g/l) bei pH 1,8 bis zur gewünschten Schichtdicke zugefahren. Hierbei wird der pH-Wert mit Natronlauge auf 1,8 konstant gehalten. Nach einer Nachrührzeit von 15 min wird das Produkt wird abfiltriert, gewaschen, getrocknet und bei 400 °C getempert.
Das Produkt besteht aus 33,3 % Aluminium, 55,6 % SiO₂, 1,5 % SnO₂ und 9,6 % TiO₂ und glänzt charakteristisch silbrig.

### Beispiel 4

Analog Beispiel 3 werden 100 g Aluminiumpulver zunächst mit 400 ml 10 %-iger Wasserstoffperoxidlösung passiviert und nachfolgend bei pH=6,5 mit SiO₂ beschichtet. Die Suspension wird 0,5 h bei 90 °C nachgerührt und anschließend mit einer Zinnlösung (11,6 g SnCl₄ · 5H₂O gelöst in 40 ml 37 %iger Salzsäure und mit VE-Wasser auf 400 ml aufgefüllt) mit einer Dosierrate von mit 4 ml/min solange versetzt bis der pH-Wert auf 1,8 gesunken ist. Der pH-Wert wird mit Natronlauge auf 1,8 gehalten. Nach beendeter Zugabe der Zinnsalzlösung wird 0,5 h nachgerührt. Nun wird der pH-Wert auf 3,0 gestellt und bei 75 °C mit dem Zudosieren einer 3 %igen Eisen(III)chloridlösung begonnen. Der pH-Wert wird mit 32 %-iger Natronlauge konstant gehalten. Nach Erreichen der gewünschten Schichtdicke an Eisen(III)oxid wird zur Vervollständigung der Fällung 0,5 h nachgerührt. Das Produkt wird abfiltriert, getrocknet, gesiebt und bei 400 °C getempert.
Das Produkt besteht aus 31,7 % Aluminium, 52,0 % SiO₂, 2,0 % SnO₂ und 14,3 % Fe₂O₃ und glänzt charakteristisch hell goldfarben.

### Beispiel 5

Analog Beispiel 3 werden 100 g Aluminiumpulver zunächst mit 400 ml 10 %-iger Wasserstoffperoxidlösung passiviert und nachfolgend bei pH=6,5 mit SiO₂ beschichtet. Die Suspension wird 0,5 h bei 90 °C nachgerührt. Anschließend wird mit einer Zinnsalzlösung (11,6 g SnCl₄ • 5H₂O gelöst in 40 ml 37 %iger Salzsäure und mit VE-Wasser auf 400 ml aufgefüllt) mit einer Dosierrate von mit 4 ml/min solange versetzt bis der pH-Wert auf 1,8 gesunken ist. Mit Natronlauge wird dieser pH-Wert konstant gehalten. Nach Verbrauch der Zinnlösung wird 0,5 h nachgerührt. Nun wird mit 4 ml/min Titantetrachloridlösung (400 g/l) bei einem pH-Wert von 1,8 bis zur gewünschten Schichtdicke zugefahren. Bei der Belegung wird der pH-Wert mit Natronlauge konstant gehalten. 15 min nach Ende der Titandioxidbelegung wird der pH mit Natronlauge auf 6,5 eingestellt. Die Zugabe der Natronwasserglaslösung erfolgt mit einer Dosierrate von 2 ml/min. Es werden insgesamt 1230 g einer an SiO₂ 13,5 %-igen Wasserglaslösung zugegeben. Dabei wird der pH-Wert mit Salzsäure konstant gehalten. Es wird solange titriert bis die gewünschte Schichtdicke erreicht ist. Man läßt 0,5 h nachrühren und versetzt dann mit einer Zinnsalzlösung (11.6 g SnCl₄ · 5H₂O gelöst in 40 ml 37 %iger Salzsäure und mit VE-Wasser auf 400 ml aufgefüllt) mit einer Dosierrate von 4 ml/min solange bis der pH-Wert auf 1,8 gesunken ist. Nach beendeter Zugabe wird 0,5 h nachgerührt. Nun wird mit 4 ml/min eine Titantetrachloridlösung (400 g/l) bei pH 1,8 bis zur gewünschten Schichtdicke zudosiert. Hierbei wird der pH-Wert mit Natronlauge auf 1,8 konstant gehalten. Nach beendeter Belegung wird 15 min nachgerührt. Zuletzt wird das Produkt abfiltriert, gewaschen, getrocknet und bei 400 °C getempert.
Das Produkt besteht aus 19,9 % Aluminium, 66,3 % SiO₂, 1,8 % SnO₂ und 12,0 % TiO₂ und glänzt charakteristisch goldfarben.

### Beispiel 6

100 g goldfarbenes Messingpulver mit einem mittleren Teilchendurchmesser von 28 µm (Resist CT der Fa. Eckart-Werke), das thermisch von der organischen Oberflächenbehandlung bei 400 °C befreit wurde, werden in 2 I volientsalztem Wasser suspendiert. Nach 0,5 h wird mit der Zugabe der Natronwasserglaslösung bei pH = 7,5 begonnen, wobei die Dosierrate 2 ml/min beträgt. Es werden insgesamt 1230 g einer an SiO₂ 13,5 %-igen Natronwasserglaslösung zugegeben. Dabei wird der pH-Wert bei 7,5 mittels Salzsäure konstant gehalten. Es wird solange titriert bis die gewünschte Schichtdicke erreicht ist. Danach wird die Dosierung abgestellt und die Reaktion durch 0,5 h bei 90 °C Nachrührzeit vervollständigt. Nun wird der pH-Wert auf 3,0 gestellt und bei 75 °C mit dem Zudosieren einer 3 %-igen Eisen(III)chloridlösung begonnen. Der pH-Wert wird mit 32 %-iger Natronlauge auf pH = 3,0 konstant gehalten. Nach Erreichen der gewünschten Schichtdicke an Eisen(III)oxid rührt man noch 0,5 h nach und filtriert ab. Nach dem Trocknen wird gesiebt und bei 400 °C getempert.
Das Produkt besteht aus 32,3 % Messing, 53,7 % SiO₂ und 14,0 % Fe₂O₃ und glänzt charakteristisch kupfergold.

### Beispiel 7

100 g Aluminiumpulver, das thermisch von der organischen Oberflächenbehandlung bei 400 °C befreit wurde, werden in 2 l vollentsalztem Wasser suspendiert. Nun wird der pH-Wert auf 6,0 eingestellt. Man titriert bei 75 °C getrennt aber gleichzeitig eine Lösung aus 20 g SnSO₄ in 100 ml VE-Wasser mit einer Lösung von 40 ml H₃PO₄ (Orthophosphorsäure der Dichte 1,75 g/cm³ in 80 ml VE-Wasser) in die Aluminiumflake-Suspension. Nach beendeter Zugabe wird zur Vervollständigung der Reaktion 0,5 h nachgerührt. Nun wird der pH-Wert auf 3,0 gestellt und bei 75 °C mit dem Zudosieren einer 3 %-igen Eisen(III)chloridlösung begonnen. Der pH-Wert wird mit 32 %-iger Natronlauge auf pH = 3,0 konstant gehalten. Nach Erreichen der gewünschten Schichtdicke an Eisen(III)oxid rührt man noch 0,5 h nach und filtriert ab. Nach dem Trocknen wird gesiebt und bei 400 °C getempert.
Das Produkt besteht aus 71,8 % Aluminium, 13,8 % Phosphat und 14,4 % Fe₂O₃ und glänzt charakteristisch rotmetallisch.

### Beispiel 8

Es werden rotbraune Spritzgußkörper aus einem Polypropylen (Stamylan PPH 10, Fa. DSM) hergestellt, die 0,5 % Aluminiumpigment aus Beispiel 1 enthalten.

Die Beschriftung mit einem Nd-YAG-Laser (12 Ampere, 10 kHz Pulsfrequenz und 200 mm/s) ist kontrastreich (dunkle Markierung) und abriebfest.

Die Beschriftung mit einem CO₂-Laser (Energiedichte 7,3 J/cm²) führt zu einer hellgrauen Markierung.

## Patentansprüche

1. Mehrschichtpigmente auf Basis von plättchenförmigen Metallpigmenten, hergestellt in dem die Metallpigmente ausschließlich naßchemisch im Eintopfverfahren belegt werden, wobei die Metallpigmente, gegebenenfalls vorab passiviert, zunächst in Wasser suspendiert, bei einem pH-Wert von 6-11 mit einer amorphen glasartigen Schicht und nachfolgend bei einem pH-Wert von < 4 mit ein oder mehreren Metalloxiden bzw. Metalloxidgemischen belegt werden.

2. Mehrschichtpigment nach Anspruch 1, **dadurch gekennzeichnet, daß** die amorphe glasartige Schicht aus SiO₂, B₂O₃ und/oder Phosphat oder deren Gemischen besteht.

3. Mehrschichtpigment nach Anspruch 1 oder 2, **dadurch gekennzeichnet, daß** die Metalloxidschicht bzw. die Schicht aus einem Metalloxidgemisch aus Titandioxid, Eisenoxid, Siliziumdioxid, Bismutoxidchlorid, Zirkonoxid, Zinnoxid, Zinkoxid, Titansuboxiden, Eisenoxidhydraten und/oder Chromoxid besteht.

4. Mehrschichtpigment nach einem der Ansprüche 1 bis 3, **dadurch gekennzeichnet, daß** auf dem Metallpigment bis zu 12 Schichten aus Metalloxiden bzw. Metalloxidgemischen aufgebracht sind.

5. Mehrschichtpigment nach einem der Ansprüche 1 bis 4, **dadurch gekennzeichnet, daß** die Metallpigmente Aluminiumplättchen sind.

6. Mehrschichtpigment nach Anspruch 5, **dadurch gekennzeichnet, daß** die Aluminiumplättchen mit einer amorphen SiO₂-Schicht und nachfolgend mit einer TiO₂- und/oder Fe₂O₃-Schicht belegt sind.

7. Mehrschichtpigment nach einem der Ansprüche 1 bis 4, **dadurch gekennzeichnet, daß** die Metallpigmente mit einer amorphen SiO₂-Schicht und nachfolgend mit einer SnO₂-, TiO₂- und/oder Fe₂O₃-Schicht belegt sind.

8. Mehrschichtpigment nach einem der Ansprüche 1 bis 4, **dadurch gekennzeichnet, daß** die Metallpigmente mit einer amorphen SiO₂-Schicht und nachfolgend mit einer SnO₂-, TiO₂-, SiO₂-, SnO₂- und TiO₂-Schicht alternierend belegt sind.

9. Mehrschichtpigment nach einem der Ansprüche 1 bis 4, **dadurch gekennzeichnet, daß** die Metallpigmente mit einer amorphen SiO₂-Schicht und nachfolgend mit einer SnO₂-, Fe₂O₃-, SiO₂-, SnO₂- und Fe₂O₃-Schicht alternierend belegt sind.

10. Verwendung der Mehrschichtpigmente nach Anspruch 1 in Farben, Lacken, Druckfarben, Sicherheitsdruckfarben, Kunststoffen, keramischen Materialien, in kosmetischen Formulierungen, zur Lasermarkierung von Kunststoffen und zur Abmischung mit anderen Pigmenten.

## Claims

1. Multilayered pigments based on platelet-shaped metal pigments, produced by coating the metal pigments exclusively by wet-chemical methods in a one-pot process, in which the metal pigments, optionally pre-passivated, are firstly suspended in water, coated with an amorphous glass-like layer at a pH of 6-11 and subsequently coated with one or more metal oxides or metal-oxide mixtures at a pH of < 4.

2. Multilayered pigment according to Claim 1, **characterised in that** the amorphous glass-like layer consists of SiO₂, B₂O₃ and/or phosphate or mixtures thereof.

3. Multilayered pigment according to Claim 1 or 2, **characterised in that** the metal-oxide layer or the layer of a metal-oxide mixture consists of titanium dioxide, iron oxide, silicon dioxide, bismuth oxychloride, zirconium oxide, tin oxide, zinc oxide, titanium suboxides, iron oxide hydrates and/or chromium oxide.

4. Multilayered pigment according to one of Claims 1 to 3, **characterised in that** up to 12 layers of metal oxides or metal-oxide mixtures are applied to the metal pigment.

5. Multilayered pigment according to one of Claims 1 to 4, **characterised in that** the metal pigments are aluminium platelets.

6. Multilayered pigment according to Claim 5, **characterised in that** the aluminium platelets are coated with an amorphous SiO₂ layer and subsequently with a TiO₂ and/or Fe₂O₃ layer.

7. Multilayered pigment according to one of Claims 1 to 4, **characterised in that** the metal pigments are coated with an amorphous SiO₂ layer and subsequently with an SnO₂, TiO₂ and/or Fe₂O₃ layer.

8. Multilayered pigment according to one of Claims 1 to 4, **characterised in that** the metal pigments are coated alternately with an amorphous SiO₂ layer and subsequently with an SnO₂, TiO₂, SiO₂, SnO₂ and TiO₂ layer.

9. Multilayered pigment according to one of Claims 1 to 4, **characterised in that** the metal pigments are coated alternately with an amorphous SiO₂ layer and subsequently with an SnO₂, Fe₂O₃, SiO₂, SnO₂ and Fe₂O₃ layer.

10. Use of the multilayered pigments according to Claim 1 in paints, coatings, printing inks, security printing inks, plastics, ceramic materials, in cosmetic formulations, for the laser marking of plastics and for blending with other pigments.

## Revendications

1. Pigments multicouches à base de pigments métalliques de forme lamellaire préparés en revêtant les pigments métalliques exclusivement par voie chimique humide par un procédé effectué dans un même récipient, les pigments métalliques éventuellement préalablement passivés étant tout d'abord mis en suspension dans l'eau, revêtus à un pH compris entre 6 et 11 d'une couche vitreuse amorphe, puis à un pH inférieur à 4 d'un ou plusieurs oxydes métalliques ou mélanges d'oxydes métalliques.

2. Pigment multicouche selon la revendication 1, **caractérisé en ce que** la couche amorphe est constituée de SiO₂, de B₂O₃ et/ou de phosphate ou de leurs mélanges.

3. Pigment multicouche selon la revendication 1 ou 2, **caractérisé en ce que** la couche d'oxydes métalliques ou la couche formée d'un mélange d'oxydes métalliques est constituée de dioxyde de titane, d'oxyde de fer, de dioxyde de silicium, d'oxychlorure de bismuth, d'oxyde de zirconium, d'oxyde d'étain, d'oxyde de zinc, de sous-oxydes de titane, d'oxyde de fer hydraté et/ou d'oxyde de chrome.

4. Pigment multicouche selon l'une des revendications 1 à 3, **caractérisé en ce que** l'on applique sur le pigment métallique jusqu'à 12 couches d'oxydes métalliques ou de mélanges d'oxydes métalliques.

5. Pigment multicouche selon l'une des revendications 1 à 4, **caractérisé en ce que** les pigments métalliques sont des lamelles d'aluminium.

6. Pigment multicouche selon la revendication 5, **caractérisé en ce que** les lamelles d'aluminium sont revêtues d'une couche de SiO₂ amorphe, puis d'une couche de TiO₂ et/ou Fe₂O₃.

7. Pigment multicouche selon l'une des revendications 1 à 4, **caractérisé en ce que** les pigments métalliques sont revêtus d'une couche de SiO₂ amorphe, puis d'une couche de SnO₂, de TiO₂ et/ou de Fe₂O₃.

8. Pigment multicouche selon l'une des revendications 1 à 4, **caractérisé en ce que** les pigments métalliques sont revêtus d'une couche de SiO₂ amorphe, puis d'une couche de SnO₂, de TiO₂, de SiO₂, de SnO₂ et de TiO₂ en alternance.

9. Pigment multicouche selon l'une des revendications 1 à 4, **caractérisé en ce que** les pigments métalliques sont revêtus d'une couche de SiO₂ amorphe, puis d'une couche de SnO₂, de Fe₂O₃, de SiO₂, de SnO₂ et de Fe₂O₃ en alternance.

10. Utilisation des pigments multicouches selon la revendication 1 dans les encres, vernis, encres d'imprimerie, encres d'imprimerie de sécurité, matières plastiques, matériaux céramiques, dans les formulations cosmétiques, pour le marquage au laser des matières plastiques et pour le mélange avec d'autres pigments.
